# EUROPEAN PATENT SPECIFICATION

(11) **EP 4 656 903 B1**
(45) Date of publication and mention of the grant of the patent: **26.08.2026**
(21) Application number: 25179160.4
(22) Date of filing: 27.05.2025
(51) Int. Cl.: F16G 11/02, F16G 11/03, F16G 11/10

(54) **BLOCKING DEVICE FOR DRAWSTRINGS AND METHOD FOR MAKING SAID DEVICE**
BLOCKIERVORRICHTUNG FÜR ZUGSCHNÜRE UND VERFAHREN ZUR HERSTELLUNG DIESER VORRICHTUNG
DISPOSITIF DE BLOCAGE POUR CORDONS DE TRACTION ET PROCÉDÉ DE FABRICATION DE CE DISPOSITIF

(30) Priority: 29.05.2024 IT 202400012232
(43) Date of publication of application: 03.12.2025
(73) Proprietor: Uberti S.r.l., 25033 Cologne (BS) (IT)
(72) Inventor: Uberti, Paolo, Cologne (IT)
(74) Representative: Lunati & Mazzoni S.r.L.

(56) References cited:
- EP-A1- 1 279 859
- DE-C- 742 484
- FR-A1- 2 690 964
- US-A- 3 854 767
- US-A- 4 939 831
- US-A- 881 407
- US-A1- 2018 045 275

## Description

The present invention relates to a process of making a blocking device for drawstrings, and a method for making said device, of the type specified in the preamble of claim 1.

In particular, the present invention relates to a cap, and related method for making it, adapted to be constrained to one end of a drawstring of any size and material, for example of garments, curtains, backpacks or the like.

As is known, in the field of clothing, so-called drawstrings are commonly used. Drawstrings normally used, for example for clothing accessories, leather goods and luggage, curtains, or the like, must be fixed at the end so that they cannot re-enter the outlet hole and so that the end is covered and cannot be easily damaged.

Numerous drawstring caps or clamps are known and are currently available on the market.

Some of these closure caps include one or more holes on their long side, into which screws can be inserted to fasten the cavity that crosses them or stitches passing through the cavity for its secure fastening.

Other end caps are inserted at the end of the cord, pressed or riveted onto the cord itself; other caps are simply glued to the cord so as to cover it.

Furthermore, in the case of end caps that are pressed or bent to adhere firmly to the cable, the outer surface of these caps is subject to pressure during assembly, with the consequence that the assembly method damages the colour and material of the cap, resulting in a large amount of product waste.

In any case, the above-mentioned closure systems are extremely weak, since these closure caps often break or come off and must be replaced, often with great difficulty.

It is also to be noted that some of the known closure caps require complicated assembly procedures and specialised labour and, in general, blocking systems for cords suitable for any type of cord, easy to assemble and durable.

To try to overcome such drawbacks, a blocking device as described in patent application WO-A-2022219370 has been devised. US3854767A discloses a process to make a blocking device but not die-casting. DE742484C discloses a blocking device but not the process to produce the blocking device.

The blocking system described, in particular, comprises a hollow tube and an insert positioned in a cavity of one end of the tube within which the drawstring passes and including a flat ring and a plurality of ridges that firmly retain the cord inside the hollow tube.

However, even this latter system comprises some significant drawbacks.

In particular, the fact that the two components are assembled makes the cap weak, poorly resistant and not durable.

Therefore, the system just described only partially and temporarily solves the problems already manifested in known devices.

In this situation, the technical task underlying the present invention is to devise a blocking device for drawstrings, and related method of making it, capable of substantially overcoming at least part of the aforementioned drawbacks.

Within the scope of said technical task, an important object of the invention is to achieve a blocking device for drawstrings, and related method of making, which is extremely durable and easy to assemble.

Another important object of the invention is to provide a blocking device for drawstrings, and related method of making, that can be applied by anyone to the end of any cord, in a stable and durable manner.

Therefore, a further object of the invention is to provide a blocking device for drawstrings, and related method of making it, that will hardly need to be replaced or remain damaged.

The technical task and the specified objects are achieved by a process of making a blocking device for drawstrings as claimed in the appended claim 1.

Preferred technical solutions are highlighted in the dependent claims.

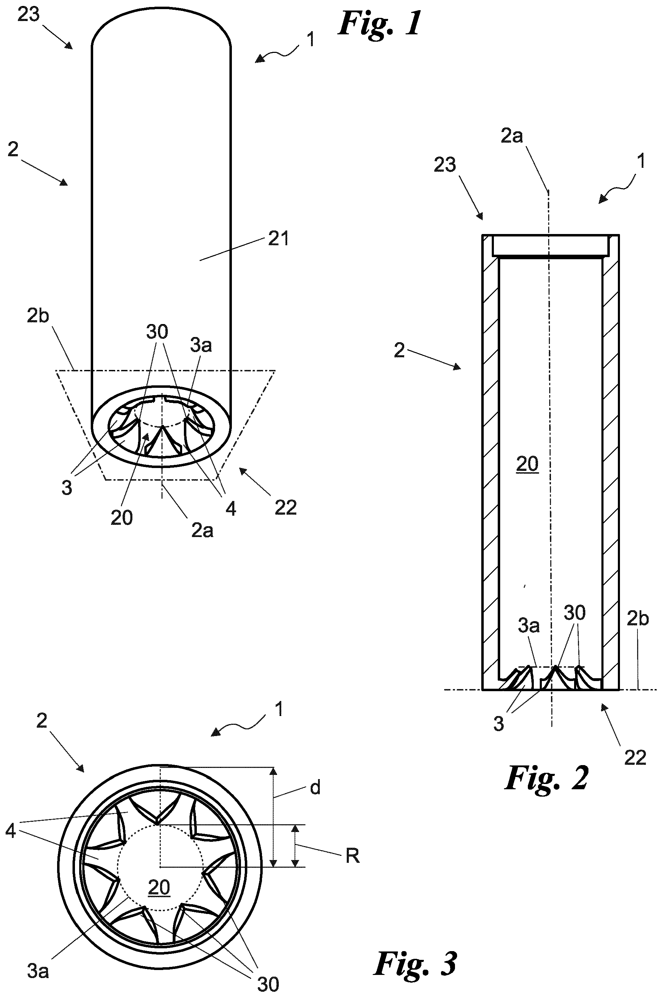

The features and advantages of the invention are clarified below by the detailed description of preferred embodiments of the invention, with reference to the accompanying drawings, wherein
**Fig. 1** shows a perspective bottom view of a blocking device for drawstrings according to the invention according to a first embodiment;
**Fig. 2** illustrates a longitudinal sectional view of the device of Fig. 1;
**Fig. 3** is a top view of the device of Figs. 1-2;

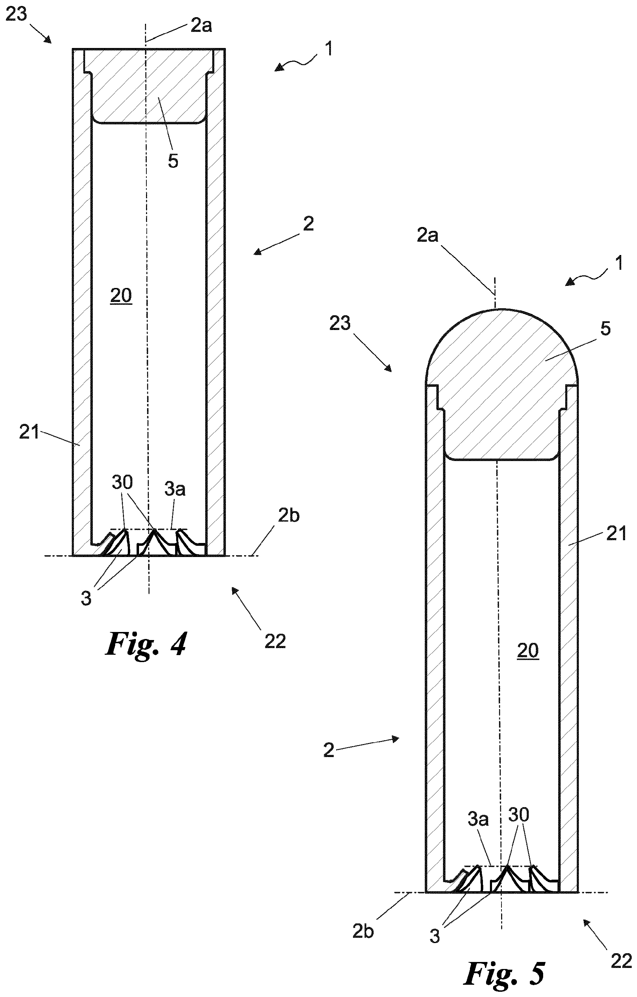

**Fig. 4** represents a longitudinal sectional view of a blocking device for drawstrings according to the invention in a second embodiment; and
**Fig. 5** shows a longitudinal sectional view of a blocking device for drawstrings according to the invention in a third embodiment.

In the present document, the measurements, values, shapes and geometrical references (such as perpendicularity and parallelism), when associated with words such as "about" or other similar terms such as "approximately" or "substantially", are to be understood as subject to measurement errors or inaccuracies due to production and/or manufacturing errors and, above all, as subject to slight deviations from the value, measurement, shape or geometrical reference to which they are associated. For example, such terms, if associated with a value, preferably indicate a deviation not greater than 10% of the value itself.

Furthermore, when used, terms such as "first", "second", "upper", "lower", "main" and "secondary" do not necessarily identify an order, a priority of relationship or relative position, but may simply be used to more clearly distinguish different components from one another.

Unless otherwise specified, as results from the following discussions, it is considered that terms such as "processing", "computing", "determination", "calculation", or similar, refer to the action and/or processes of a computer or similar electronic computing device that manipulates and/or transforms data represented as physical quantities, such as electronic magnitudes of registers of a computer system and/or memories into other data similarly represented as physical quantities within computer systems, registers or other memory, transmission or information display devices.

The measurements and data reported in the present text are to be considered, unless otherwise indicated, as carried out in ICAO Standard Atmosphere (ISO 2533:1975).

With reference to the Figures, the blocking device for drawstrings according to the invention is globally denoted by the number **1.**

The blocking device 1 is adapted to be integrally constrained to a drawstring at one of its ends, whether completely free or including, in turn, a terminal knot. Therefore, the device 1 comprises at least one body **2.**

The body 2 is of tubular type. Therefore, it develops predominantly along a main axis **2a.**

The main axis 2a is substantially a virtual, approximately rectilinear axis, possibly also curved, along which the body 2 develops.

The latter, being tubular, defines a cavity **20.** The cavity 20 is the space enclosed by the body 2. Moreover, it corresponds to an empty space that passes through the body 2 from end to end.

The cavity 20 is therefore bounded by a wall **21.**

The wall 21 bounds the cavity 20 laterally, that is, around the main axis 2a. Therefore, the cavity 20 is suitable for housing, preferably within the wall 21, at least part of a drawstring along the main axis 2a.

Furthermore, the body 2 preferably includes at least one access **22.**

The access 22 is defined at one end of the body 2. Therefore, the access 22 is the area of the body 2 through which the drawstring can access the cavity 20. Naturally, the body 2 may also comprise an outlet **23.**

If present, the outlet 23 is opposite the access 22. Therefore, the outlet 23 is located at an end of the body 2 opposite to the access 22.

The outlet 23 may be free, or it may be occupied by a further element.

Indeed, the device 1 may comprise a cap **5.**

If present, the cap 5 may be coupled to the outlet 23, in particular by interlocking or other assembly methods. Moreover, the cap 5 may have a particular shape, possibly flat or convex.

The cap 5 may also be in one piece with the wall 21.

In any case, the device 1 comprises a plurality of ridges **3.**

Each of the ridges 3 is wedge-shaped. Therefore, each defines a respective tip **30.** The tip 30 is the pointed part of the ridge 3, that is, the converging part of the latter.

The ridges 3 extend radially to the main axis 2a starting from the wall 21. In particular, the ridges 3 extend in such a way that the tips 30 converge towards the main axis 2a.

The ridges 3 are furthermore mutually separated by gaps **4.**

The gaps 4 are substantially the space areas that divide and separate the ridges 3. They may be made by notches formed between the ridges 3.

Still more in detail, advantageously, each of the ridges 3 is in one piece with the wall 21. In this sense, from a manufacturing point of view, the wall 21 may define a bottom transverse to the main axis 2a which, once notched to form the gaps 4, forms the ridges 3.

Each ridge 3 thus protrudes from the wall 21 at the same main plane 2b. The main plane 2b is therefore a virtual plane normal, that is, perpendicular to the main axis 2a.

This means that, adjacent to the wall 21, the ridges 3 are aligned with one another along the main plane **2b.**

Furthermore, advantageously, each ridge 3 is curved in such a way that the respective tips 30 are facing towards the inside of the cavity **20.**

The ridges 3 may protrude from the wall **21** at the access 22. Therefore, the main plane 2b may lie at the access 22.

Moreover, the tips 30 may define specific dimensions. In particular, the tips 30 may be distributed around the main axis 2a at a circumference **3a.**

The latter is preferably a virtual line determined on a plane parallel to the main plane 2b.

Therefore, the circumference is preferably centred with respect to the main axis 1a and defines a radius R. The radius R is, naturally, given by the distance between the circumference and the main axis 2a.

Furthermore, the wall 21 also defines a distance with respect to the main axis 1a at the main plane 2b. In detail, the wall 21 defines at least a minimum distance d. The minimum distance d is the smallest distance that the wall 21 determines with respect to the main axis 1a.

If the wall 21 is cylindrical, as it may be, for example, the minimum distance d corresponds to the radius defined by the circumference determined by the wall 21 at the main plane 2b.

It is not, however, necessary that the wall 21 be cylindrical. Preferably, however, the wall 21 extends around the main axis 2a normally to the main plane 2b.

Preferably, the radius R defined by the circumference 3a is smaller than half of the minimum distance d. Therefore, the ridges 3 are curved or folded, in at least one preferred embodiment, in such a way as to achieve this proportion.

The device 1 may, in addition, be made of various materials. Preferably, one or more of the body 2 and the ridges 3 include a metallic material, particularly preferably Zamak.

Moreover, the ridges 3 are curved from initial shape or at a later time by plastic deformation.

The operation of the blocking device 1 for drawstrings previously described in structural terms is as follows.

The drawstring can be easily inserted into the body 2 through the access 22. The portion of the drawstring inside the cavity 20 is then trapped by the ridges 3 which, being curved, press with the tip 30 the outer surface of the drawstring, which can no longer slide along the main axis 2a out of the access 22.

The invention comprises a new method for making a blocking device for drawstrings, in particular the device 1 as previously described.

The method comprises a moulding step, wherein the object is made by die casting. The method may also comprise at least one notching step not according to the appended claims.

In the notching step, preferably, the wall 21 is notched at the access 22 creating the gaps 4 so as to form the ridges 3. In a preferred alternative, the gaps are created during the moulding step.

Therefore, the method also comprises a curving step.

In the curving step, preferably, the ridges 3 are plastically curved by orienting the tips 30 towards the inside of the cavity 20.

Moreover, if the device 1 comprises a cap 5, the method may also include a capping step. In the capping step, preferably, the outlet 23 is capped by interlocking the cap 5 onto the body 2 at the outlet 23.

The blocking device 1 for drawstrings according to the invention achieves important advantages.

Indeed, the blocking device 1 for drawstrings is extremely durable and easy to assemble.

Furthermore, the blocking device 1 for drawstrings can be applied by anyone to the end of any cord, in a stable and durable manner.

Therefore, the blocking device 1 for drawstrings is long lasting and, for this reason, hardly needs to be replaced or remains damaged.

The invention is susceptible to variants falling within the scope of the inventive concept defined by the claims.

Within this scope, all details may be replaced by equivalent elements, and materials, shapes, and sizes may be any.

## Claims

1. Process of making a blocking device (1) for drawstrings,
- said blocking device (1) comprising:
- a tubular body (2) developing along a main axis (2a), defining a cavity (20) bounded by a side wall (21) and suitable for housing at least part of a drawstring along said main axis (2a) and including at least one access (22) through which said drawstring can access said cavity (20); and
- a plurality of wedge-shaped ridges (3) each defining a tip (30), reciprocally separated by gaps (4) and developing radially to said main axis (2a) from said wall (21) so that said tips (30) converge towards said main axis (2a); and wherein
- each of said ridges (3) is in one piece with said wall (21) and protrudes from said wall (21) at the same main plane (2b) normal to said main axis (2a); **characterized in that**
- said body (2) and said ridges (3) are made by die casting in one single piece with said ridges (3) curved, in a curving step, in such a way that said respective tips (30) face the inside of said cavity (20).

2. Process according to claim 1, wherein said main plane (2) lies at the level of said access (22).

3. Process according to any of the preceding claims, wherein said tips (30) are distributed around said main axis (2a) at the level of a circumference (3a) determined in a plane parallel to said main plane (2b), centered with respect to said main axis (2a) and defining a radius (R) smaller than half of a minimum distance (d) between said main axis (1a) and said wall (21) at the level of said main plane (2b).

4. Process according to any of the preceding claims, wherein said wall (21) is developed around said main axis (2a) perpendicularly to said main plane (2b).

5. Process according to the previous claim, wherein said wall (21) is cylindrical.

6. Process according to the previous claim, wherein one or more of said body (2) and said ridges (3) includes Zamak.

7. Process according to the previous claim, wherein said ridges (3) are curved since the initial production.

8. Process according to the preceding claim, wherein said body (2) further comprises an outlet (23) opposite said access (22) and said device (1) comprises a cap (5) coupled by interlocking to said outlet (23).

9. Process according to the preceding claim, comprising the capping of said outlet (23) by fitting said cap (5) onto said body (2) at said outlet (23).

## Patentansprüche

1. Verfahren zur Herstellung einer Sperrvorrichtung (1) für Kordelzug,
- die Sperrvorrichtung (1) umfassend:
- einen rohrförmigen Körper (2), der sich entlang einer Hauptachse (2a) erstreckt, einen Hohlraum (20) definiert, der durch eine Seitenwand (21) begrenzt wird und dazu geeignet ist, mindestens einen Teil eines Kordelzugs entlang der Hauptachse (2a) aufzunehmen, und der mindestens einen Zugang (22) umfasst, durch den der Kordelzug in den Hohlraum (20) eintreten kann; und
- eine Mehrzahl keilförmiger Rippen (3), die jeweils eine Spitze (30) definieren, die durch Zwischenräume (4) voneinander beabstandet sind und sich radial zu der Hauptachse (2a) von der Seitenwand (21) erstrecken, sodass die Spitzen (30) zu der Hauptachse (2a) zusammenlaufen;
wobei
- jede der Rippen (3) einstückig mit der Seitenwand (21) ausgebildet ist und von der Seitenwand (21) in derselben Hauptebene (2b) vorsteht, die sich senkrecht zu der Hauptachse (2a) erstreckt;
**dadurch gekennzeichnet, dass**
- der Körper (2) und die Rippen (3) durch Druckguss einstückig hergestellt werden, wobei die Rippen (3) in einem Biegeschritt gebogen werden, sodass die jeweiligen Spitzen (30) innen des Hohlraums (20) zugewandt sind.

2. Verfahren nach Anspruch 1, wobei die Hauptebene (2b) auf gleicher Ebene des Zugangs (22) liegt.

3. Verfahren nach einem der vorhergehenden Ansprüche, wobei die Spitzen (30) um die Hauptachse (2a) auf einer Ebene eines Umfangs (3a) verteilt sind, der in einer Ebene definiert wird, die sich parallel zu der Hauptebene (2b) erstreckt, in Bezug auf die Hauptachse (2a) zentriert wird und einen Radius (R) definiert, der kleiner als die Hälfte eines Mindestabstands (d) zwischen der Hauptachse (1a) und der Seitenwand (21) auf der gleichen Ebene der Hauptebene (2b) ist.

4. Verfahren nach einem der vorhergehenden Ansprüche, wobei sich die Wand (21) um die Hauptachse (2a) senkrecht zu der Hauptebene (2b) erstreckt.

5. Verfahren nach dem vorhergehenden Anspruch, wobei die Wand (21) zylindrisch ausgebildet ist.

6. Verfahren nach dem vorhergehenden Anspruch, wobei einer oder mehrere der Körper (2) und der Rippen (3) Zamak umfassen.

7. Verfahren nach dem vorhergehenden Anspruch, wobei die Rippen (3) bereits bei der anfänglichen Herstellung gebogen werden.

8. Verfahren nach dem vorhergehenden Anspruch, wobei der Körper (2) ferner eine Austrittsöffnung (23) umfasst, die dem Zugang (22) gegenüberliegt und die Vorrichtung (1) eine Kappe (5) umfasst, die durch Ineinandergreifen mit der Austrittsöffnung (23) gekoppelt wird.

9. Verfahren nach dem vorhergehenden Anspruch, umfassend das Verschließen der Austrittsöffnung (23), indem die Kappe (5) auf den Körper (2) an der Austrittsöffnung (23) aufgesetzt wird.

## Revendications

1. Procédé de fabrication d'un dispositif de blocage (1) pour cordons de serrage,
- ledit dispositif de blocage (1) comprenant :
- un corps tubulaire (2) s'étendant selon un axe principal (2a), définissant une cavité (20) délimitée par une paroi latérale (21) et adapté pour loger au moins une partie d'un cordon de serrage le long dudit axe principal (2a) et comprenant au moins un accès (22) à travers lequel ledit cordon de serrage peut accéder à ladite cavité (20) ; et
- une pluralité de nervures (3) en forme de coin, chacune définissant une pointe (30), réciproquement séparées par des espaces (4) et s'étendant radialement par rapport audit axe principal (2a) à partir de ladite paroi (21), de sorte que lesdites pointes (30) convergent vers ledit axe principal (2a) ;
dans lequel
- chacune desdites nervures (3) est réalisée d'une seule pièce avec ladite paroi (21) et fait saillie à partir de ladite paroi (21) dans un même plan principal (2b) perpendiculaire audit axe principal (2a) ;
**caractérisé en ce que**
- ledit corps (2) et lesdites nervures (3) sont réalisés par moulage sous pression en une seule pièce, lesdites nervures (3) étant courbées, selon une étape de courbure, de telle sorte que lesdites pointes respectives (30) sont orientées vers l'intérieur de ladite cavité (20).

2. Procédé selon la revendication 1, dans lequel ledit plan principal (2b) est situé au niveau dudit accès (22).

3. Procédé selon l'une quelconque des revendications précédentes, dans lequel lesdites pointes (30) sont réparties autour dudit axe principal (2a) au niveau d'une circonférence (3a) définie dans un plan parallèle audit plan principal (2b), centrée par rapport audit axe principal (2a) et définissant un rayon (R) inférieur à la moitié d'une distance minimale (d) entre ledit axe principal (1a) et ladite paroi (21) au niveau dudit plan principal (2b).

4. Procédé selon l'une quelconque des revendications précédentes, dans lequel ladite paroi (21) s'étend autour dudit axe principal (2a) perpendiculairement audit plan principal (2b).

5. Procédé selon la revendication précédente, dans lequel ladite paroi (21) est cylindrique.

6. Procédé selon la revendication précédente, dans lequel l'un ou plusieurs desdits corps (2) et desdites nervures (3) comprennent du Zamak.

7. Procédé selon la revendication précédente, dans lequel lesdites nervures (3) sont courbées dès la production initiale.

8. Procédé selon la revendication précédente, dans lequel ledit corps (2) comprend en outre une ouverture de sortie (23) opposée audit accès (22) et ledit dispositif (1) comprend un capuchon (5) accouplé par encliquetage à ladite ouverture de sortie (23).

9. Procédé selon la revendication précédente, comprenant l'obturation de ladite ouverture de sortie (23) par montage dudit capuchon (5) sur ledit corps (2) au niveau de ladite ouverture de sortie (23).
